# EUROPEAN PATENT SPECIFICATION

(11) **EP 2 307 196 B1**
(45) Date of publication and mention of the grant of the patent: **04.01.2012**
(21) Application number: 09802589.3
(22) Date of filing: 13.07.2009
(51) Int. Cl.: B32B 27/08, A41D 27/24

(54) **A RIBBON FOR HEAT -SEALING**
WÄRMEVERSIEGELUNGSBAND
RUBAN POUR THERMOSCELLAGE

(30) Priority: 28.07.2008 IT MI20081385
(43) Date of publication of application: 13.04.2011
(73) Proprietor: Fra-Ser S.P.A., 20123 Milano (IT)
(72) Inventor: DEGNI, Pietro, I-20037 Paderno Dugnano (IT)
(74) Representative: Tansini, Elio Fabrizio
(86) International application number: PCT/IB2009/053032
(87) International publication number: WO 2010/013156

(56) References cited:
- EP-A1- 1 283 295
- DATABASE WPI Week 200319 Thomson Scientific, London, GB; AN 2003-189010 XP002551215 & JP 2002 338908 A (TORAY IND INC) 27 November 2002 (2002-11-27)
- DATABASE WPI Week 200564 Thomson Scientific, London, GB; AN 2005-622662 XP002551216 & JP 2005 226175 A (GUNZE KK) 25 August 2005 (2005-08-25)

## Description

The present invention relates to an article of clothing comprising a ribbon for heat-sealing .

In particular, the object of the present invention falls within the sector involving heat-sealing of ribbons to textiles or fabrics in order to carry out junctions or trimming operations on the fabrics without use of seams.

It is known that there are presently on the market different garments or fabrics having trimmings or junction regions in which they are joined to other fabric portions by use of particular iron-on ribbons suitable to be heat-sealed to the fabric.

These ribbons enable seams or use of glues to be avoided for mutually connecting the fabric portions, or they are also used for reinforcing existing seams thus giving rise to a softer, covered seam or a seam where the edge fraying is prevented.

Generally, ribbons used for enabling the above operations consist of a thin strip of an elastic material adapted to be heat-sealed to fabric edges.

For example, a heat-melting tape suitable for assembling fabrics by heat-sealing is disclosed by JP 2002-338908A. This heat-melting tape comprises a main layer which is made of a heat-melting material such as a urethane-based resin. A raw pressure-sensitive adhesive material having adhesiveness properties in ordinary room temperature is applied on one or both sides of the main heat-melting layer. When the heat-melting tape is interposed between two superposed fabrics the pressure-sensitive adhesive material temporarily fix the fabrics so as to prevent reciprocal slipping or movements before the heat-melting operation has been completed.
Such a pressure-sensitive adhesive material shall just have the adhesiveness in ordinary room temperature and is preferably made of an acrylic copolymerization system resin, thought a lot of different materials are suggested.
EP 1283295 describes a sealing tape to be heat sealed to a fabric comprising a polyurethane support suitable for heat sealing to a fabric and a patterned resin coated on the outer surface. This tape is heat sealed to a fabric through the hot melt layer remaining the pattern layer in sight.

For carrying out this type of working, suitable machines are used that couple and heat the ribbon and fabric regions to be joined.

Generally the ribbons briefly described above have the only aim of enabling fastening (union of portions) or trimming operations (reinforcement, waterproofing, etc.) on the fabric and personalisation of same can only take place through modification of the respective colour.

The present invention aims at solving the above mentioned drawbacks.

It is an aim of the invention to make available a ribbon to be heat-sealed to fabrics which is differentiated from the already existing ribbons both from a functional and an aesthetic point of view, i.e. allowing new technical effects to be added to the manufactured article of clothing using such a ribbon, and also ensuring the possibility of important aesthetic effects that are of great importance in the clothes and fashion sector.

The foregoing and further aims that will become more apparent in the progress of the present description are substantially achieved by a ribbon for heat-sealing of fabrics in accordance with the appended claims.

Further features and advantages will become more apparent from the detailed description of some embodiments of and article of clothing in accordance with the invention.

This description will be carried out hereinafter with reference to the accompanying drawings given by way of non-limiting example, in which:
- Figs. 1, 2, 3, 4 show some alternative embodiments of a ribbon for heat-sealing of fabrics according to the present invention;
- Figs. 1a, 2a, 3a show respective cross sections of the ribbons seen in Figs- 1, 2, 3;
- Fig. 6 shows a garment by way of example, which is equipped with the heat-sealing ribbon in accordance with anyone of claims 1 to 4.

With reference to the drawings, a ribbon for heat-sealing of fabrics in accordance with the invention has been generally identified with reference numeral 1.

This ribbon will be used in combination with machines for heat-sealing and junction of fabrics that are presently on the market for carrying out trimming operations on fabrics or garments, or joining the edges or portions of these fabrics following generally conventional techniques not of interest in the present invention.

The ribbon first of all comprises at least one laminar support 2 made of a polyurethane-based material and in particular made of a material suitable for being heat-sealed to a fabric. Generally, support 2 is made of a polyurethane material. This material not only enables heat-sealing, but in addition has elastic properties making it particularly suitable for coupling to fabrics also of different nature.

Depending on its particular composition, the polyurethane can also have such elastic features, i.e. stretching and spring-back features, that it can act like a true rubber band.

In addition, it can be obtained in different colours through addition of the appropriate pigment during production.

Alternatively, it can be also manufactured so as to appear substantially transparent or opaque.

Generally, the laminar support 2 has a major longitudinal extension L and a smaller transverse size S, so as to take a ribbon-like configuration. It comprises a lower face 2a which is designed to come into contact with, and be heat-sealed to the fabric and a face 2b opposite to the preceding one.

The overall thickness of the laminar support 2 is smaller than some tenths of a millimetre and is generally in the order of a hundredth of a millimetre.

Advantageously, the ribbon for heat-sealing shown in the drawings also comprises at least one layer 3 of silicone-based material disposed at least close to said upper face 2b of the support.

Generally, the material used for layer 3 can directly be silicone or, alternatively, once more a polyurethane material incorporating silicone material.

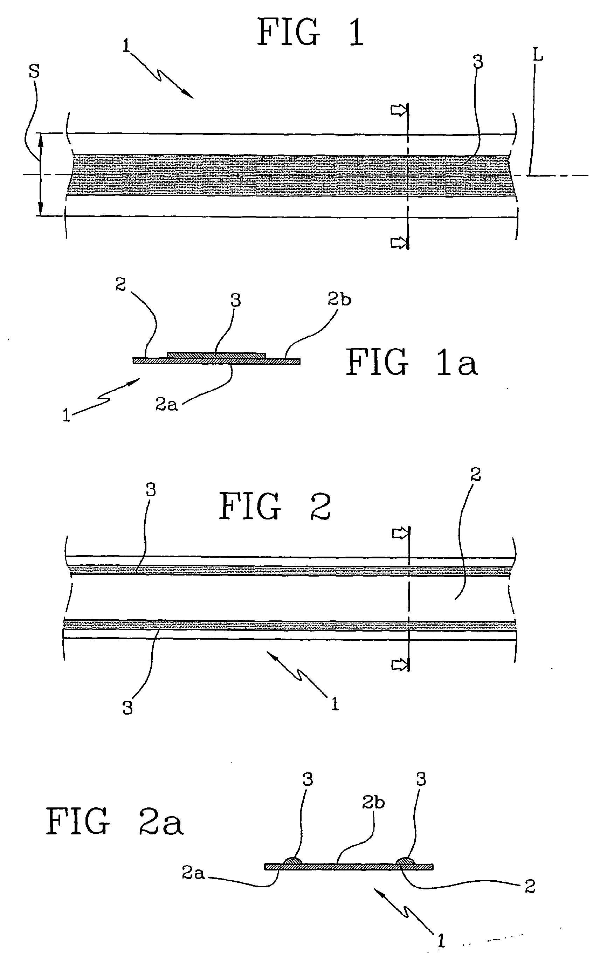

As can be viewed from Figs. 1-4, layer 3 will be exclusively disposed at the upper face 2b of the support and in detail it will only cover some portions thereof so that part of the upper face 2b of the laminar support 2 is in sight.

Generally, layer 3 of silicone-based material appears in the form of a continuous or broken strip exactly along the major longitudinal extension L of the laminar support 2.

In this regard Fig. 1 shows a preferred embodiment in which layer 3 is made up of a central strip extending without a break in the longitudinal direction and disposed parallel to the edges of the laminar support 2.

Alternatively, the presence of two or more layers 3 separated from each other and disposed on the upper face 2b of support 2 can be provided.

Fig. 2 shows the last-mentioned embodiment.

It is apparent that the single layer in Fig. 1 or the plurality of layers in Fig. 2 can be either continuous along the longitudinal extension or also interrupted (also a combination of continuous and interrupted lines is possible).

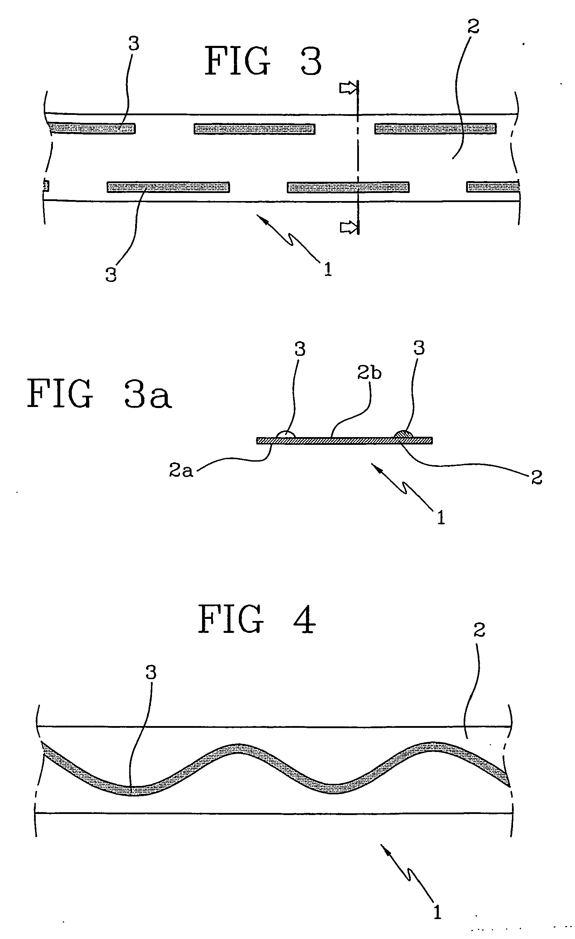

In this regard Fig. 3 shows a possible alternative embodiment showing interrupted longitudinal strips of silicone-based material 3.

It will be appreciated that laying of material 3 can take place, always along the major longitudinal direction L, with an undulated course (see Fig. 4) or also an irregular course depending on technical and aesthetic requirements of the product.

From a production point of view a possible manufacturing method will be hereinafter illustrated, but it is pointed out that other production procedures and/or devices could be equivalently adopted.

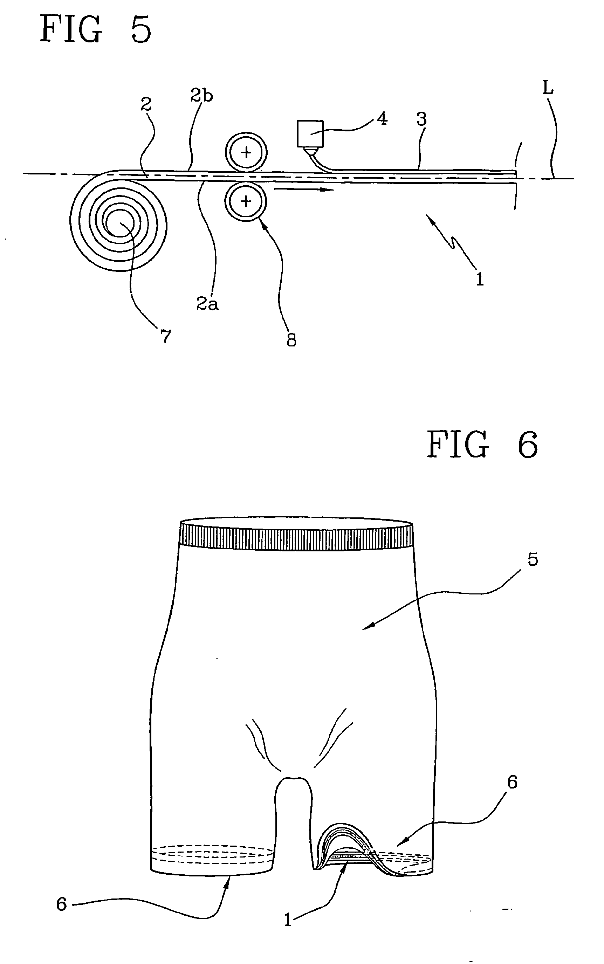

First of all, manufacture of said support 2 of polyurethane material in the form of a ribbon occurs. The latter, wound up into a reel as shown by reference 7 in Fig. 5, is unrolled through suitable actuating means 8 such as rollers or the like and passed under one or more delivery nozzles 4 for direct laying of layer 3 made of a silicone-based material on the upper face 2b of the laminar support 2.

It is apparent that if the silicone distribution is interrupted as the ribbon moves on along the longitudinal direction, interrupted silicone strips 3 will be obtained; on the contrary, if the delivery nozzles and the ribbon are shifted relative to each other in a transverse direction, during the forward movement of the ribbon itself, layers 3 will have different courses from the rectilinear one.

The product once made will have a lower face 2a made up of polyurethane material which is adapted to be directly bound to the fabric or fabric portion; vice versa, the upper portion will have one or more continuous or interrupted strips of silicone material provided with a glossy surface finish that is different from the surface finish of the upper face 2b of the support 2; the laid material further has higher friction and grip properties as compared with those of the polyurethane material.

In addition to the above mentioned aesthetic aims, the presence of the layer/s of silicone material has the function of increasing friction so that, for instance in sports or technical garments, the article of clothing is prevented from moving, once worn.

By mere way of example, Fig. 6 shows an article of clothing 5 provided with at least one portion of fabric 6 on which the ribbon referred to in Figs. 1-4 is heat-sealed.

This article of clothing can consist of a pair of cyclist's shorts for example, where the ribbon is heat-sealed at least at the end region of the leggings, the lower face 2b being heat-sealed to fabric 6 and the upper face 2a facing a region designed to come into contact with the user's legs.

In this way, once the shorts are worn, the layer of silicone material will help in preventing the article of clothing from moving relative to the position taken when worn.

The invention achieves important advantages.

First of all a ribbon for heat-sealing of fabrics has been obtained which has further particular technical functions different from those of the ribbons presently used and on the market.

The presence of a layer (or more layers) of silicone material helps in greatly varying the aesthetic effect of the ribbon at will, because the silicone material appears to be glossier and of a colour different from the base layer of polyurethane material.

In addition, due to the presence of the silicone, technical articles of clothing can be made which are able to maintain or ensure the position they have taken, once worn.

## Claims

1. An article of clothing (5) comprising:
- at least one portion of fabric (6);
**characterised in that** it further comprises at least one ribbon comprising at least one laminar support (2) of a polyurethane-based material suitable for heat-sealing to a fabric, said support comprising a lower face (2a) into contact with, and heat-sealed to said portion of fabric, and an upper face (2b) opposite to the lower face, wherein said ribbon further comprises at least one layer (3) of silicone-based material disposed at least at said upper face (2b) of the support (2), wherein said layer (3) of silicone-based material has higher friction and grip properties as wherein compared with those of the polyurethane-based material, wherein at least one portion of the upper face (2b) of the laminar support (2) that is not covered by the layer (3) of a silicone-based material remain in sight, together with the layer of silicone-based material, so that the article of clothing is prevented from moving, once worn.

2. An article as claimed in the preceding claim, **characterised in that** the support (2) has a major longitudinal extension (L), said layer (3) of a silicone-based material having a prevailing arrangement along said longitudinal extension (L).

3. An article as claimed in anyone of the preceding claims, **characterised in that** the layer of silicone-based material appears in the form of a continuous or broken strip, along the major longitudinal extension (L) of the laminar support (2).

4. An article as claimed in anyone of the preceding claims, **characterised in that** said ribbon comprises at least two layers (3), preferably in the form of continuous or broken strips along the major longitudinal extension (L) of the laminar support, arranged on said upper face (2b) of the support (2).

5. An article as claimed in anyone of the preceding claims, **characterised in that** the layer or layers (3) of silicone-based material cover the upper face (2b) of the support (2) only partly, said layers being preferably absent at the lower face (2a) of the support.

6. An article as claimed in anyone of the preceding claims, **characterised in that** said layer (3) of a is silicone-based material is directly laid on the upper face (2b) of the laminar support (2), as said ribbon does not comprise other layers or supports except for the laminar support (2) and the silicone layer/s (3).

## Patentansprüche

1. Bekleidungsartikel (5), umfassend:
- mindestens einen Gewebeabschnitt (6),
**dadurch gekennzeichnet, dass** er ferner mindestens ein Band, umfassend mindestens einen Laminarträger (2) eines auf Polyurethan basierenden Materials, das zum Heißsiegeln auf ein Gewebe geeignet ist, umfasst, wobei der Träger eine untere Fläche (2a) umfasst, die in Kontakt mit dem Gewebeabschnitt und daran heißgesiegelt ist, sowie eine obere Fläche (2b) gegenüber der unteren Fläche, wobei das Band ferner mindestens eine Schicht (3) auf Silikon basierenden Materials umfasst, das mindestens auf der oberen Fläche (2b) des Trägers (2) angeordnet ist, wobei die Schicht (3) auf Silikon basierenden Materials bessere Reibungs- und Haftvermögeneigenschaften im Vergleich zum auf Polyurethan basierenden Material aufweist, wobei zumindest ein Abschnitt der oberen Fläche (2b) des Laminarträgers (2), der nicht von der Schicht (3) eines auf Silikon basierenden Materials bedeckt ist, gemeinsam mit der Schicht auf Silikon basierenden Materials sichtbar bleibt, sodass verhindert wird, dass sich der Bekleidungsartikel bewegt, wenn er getragen wird.

2. Artikel nach dem vorangehenden Anspruch, **dadurch gekennzeichnet, dass** der Träger (2) eine Hauptlängsausdehnung (L) aufweist, wobei die Schicht (3) eines auf Silikon basierenden Materials entlang der Längsausdehnung (L) eine vorherrschende Anordnung aufweist.

3. Artikel nach einem der vorangehenden Ansprüche, **dadurch gekennzeichnet, dass** die Schicht auf Silikon basierenden Materials in Form eines kontinuierlichen oder unterbrochenen Streifens entlang der Hauptlängsausdehnung (L) des Laminarträgers (2) erscheint.

4. Artikel nach einem der vorangehenden Ansprüche, **dadurch gekennzeichnet, dass** das Band mindestens zwei Schichten (3), vorzugsweise in Form von kontinuierlichen oder unterbrochenen Streifen, entlang der Hauptlängsausdehnung (L) des Laminarträgers umfasst, die auf der oberen Fläche (2b) des Trägers (2) angeordnet sind.

5. Artikel nach einem der vorangehenden Ansprüche, **dadurch gekennzeichnet, dass** die Schicht bzw. die Schichten (3) auf Silikon basierenden Materials die obere Fläche (2b) des Trägers (2) nur teilweise bedecken, wobei die Schichten auf der unteren Fläche (2a) des Trägers vorzugsweise nicht vorhanden sind.

6. Artikel nach einem der vorangehenden Ansprüche, **dadurch gekennzeichnet, dass** die Schicht (3) eines auf Silikon basierenden Materials direkt auf die obere Fläche (2b) des Laminarträgers (2) gelegt wird, da das Band abgesehen vom Laminarträger (2) und von der/den Silikonschicht/en (3) keine anderen Schichten oder Träger umfasst.

## Revendications

1. Article de vêtement (5) comprenant :
- au moins une partie de tissu (6) ;
**caractérisé en ce qu'**il comprend également au moins un ruban présentant au moins un support laminaire (2) en un matériau à base de polyuréthane pouvant être thermoscellé à un tissu, ledit support comprenant une face inférieure (2a) en contact avec et thermoscellée à ladite partie de tissu, et une face supérieure (2b) en face de la face inférieure, dans lequel ledit ruban comprend aussi au moins une couche (3) en matériau à base de silicone posée au moins sur ladite face supérieure (2b) du support (2), dans lequel ladite couche (3) en matériau à base de silicone a des propriétés supérieures de frottement et d'adhérence par rapport à celles du matériau à base de polyuréthane, dans lequel au moins une partie de la face supérieure (2b) du support laminaire (2) qui n'est pas couverte par la couche (3) en un matériau à base de silicone reste apparente, avec la couche en matériau à base de silicone, de manière que l'article de vêtement ne peut pas bouger, lorsqu'il est porté.

2. Article selon la revendication précédente, **caractérisé en ce que** le support (2) a un développement longitudinal principal (L), ladite couche (3) en un matériau à base de silicone ayant une disposition dominante le long dudit développement longitudinal (L).

3. Article selon l'une quelconque des revendications précédentes, **caractérisé en ce que** la couche en matériau à base de silicone se présente sous la forme d'une bande continue ou interrompue, le long du développement longitudinal principal (L) du support laminaire (2).

4. Article selon l'une quelconque des revendications précédentes, **caractérisé en ce que** ledit ruban comprend au moins deux couches (3), de préférence sous la forme de bandes continues ou interrompues le long du développement longitudinal principal (L) du support laminaire, posées sur ladite face supérieure (2b) du support (2).

5. Article selon l'une quelconque des revendications précédentes, **caractérisé en ce que** la couche ou les couches (3) en matériau à base de silicone couvrent seulement partiellement la face supérieure (2b) du support (2), lesdites couches étant de préférence absentes sur la face inférieure (2a) du support.

6. Article selon l'une quelconque des revendications précédentes, **caractérisé en ce que** ladite couche (3) en un matériau à base de silicone est directement appliquée sur la face supérieure (2b) du support laminaire (2), étant donné que ledit ruban ne comprend pas d'autres couches ou supports, à l'exception du support laminaire (2) et de la/des couche/s de silicone (3).
